# EUROPÄISCHE PATENTSCHRIFT

(11) **EP 1 117 565 B1**
(45) Veröffentlichungstag und Bekanntmachung des Hinweises auf die Patenterteilung: **27.08.2003**
(21) Anmeldenummer: 99948914.9
(22) Anmeldetag: 01.10.1999
(51) Int. Cl.: B60R 16/02

(54) **VERFAHREN ZUM FIXIEREN VON FLACHLEITUNGEN AUF EINEM FORMTRÄGERTEIL, ZUGEHÖRIGES FORMPRESSWERKZEUG UND FORMTRÄGERTEIL**
METHOD FOR FIXING FLAT CONDUCTOR CABLES ON A SHAPED SUPPORT PART, CORRESPONDING COMPRESSION MOLDING TOOL AND SHAPED SUPPORT PART
DISPOSITIF PERMETTANT DE FIXER DES CONDUITES PLATES SUR UNE PIECE SUPPORT MOULEE, MOULE PAR COMPRESSION ASSOCIE ET PIECE SUPPORT MOULEE

(30) Priorität: 01.10.1998 DE 19845280
(43) Veröffentlichungstag der Anmeldung: 25.07.2001
(73) Patentinhaber: Lisa Dräxlmaier GmbH, 84137 Vilsbiburg (DE)
(72) Erfinder: MÜLLER, Stefan, D-84036 Landshut (DE); FLIESER, Michael, D-84144 Geisenhausen (DE)
(74) Vertreter: HOFFMANN - EITLE
(86) Internationale Anmeldenummer: EP9907290
(87) Internationale Veröffentlichungsnummer: WO00020256

(56) Entgegenhaltungen:
- GB-A- 2 275 373
- US-A- 3 009 010
- US-A- 4 290 838
- US-A- 4 461 800
- US-A- 5 649 626
- PATENT ABSTRACTS OF JAPAN vol. 015, no. 260 (M-1131), 2. Juli 1991 (1991-07-02) & JP 03 086649 A (RIYOUSEI DENSO KK), 11. April 1991 (1991-04-11)

## Beschreibung

### Technisches Gebiet

Die Erfindung betrifft ein Verfahren zum Fixieren von Flachleitungen auf einem Formträgerteil, ein zugehöriges Formpresswerkzeug sowie ein Formträgerteil, das durch Verpressen und Aushärten einer Kunststoffmatrix geformt ist und mit zumindest einer Flachleitung versehen ist.

### Stand der Technik

Heutzutage stellt sich verstärkt das Problem, Flachleitungen auf Trägerbauteilen anzubringen. Derartige Trägerbauteile sind beispielsweise Tür- oder Dachhimmelverkleidungen für Kraftfahrzeuge. In der DE 197 30 343 A1 wird hierzu vorgeschlagen, eine flexible, flache Leiterplatte mit einem Zweistufenverfahren, einem additiven Verfahren oder dergleichen einstückig dreidimensional an der Türverkleidung anzuformen. Weiterhin wird in der DE 37 40 593 C2 vorgeschlagen, Leitungen, unter anderem bandförmige Leitungen oder Folienstreifen, in einen Kunstharz-Türrahmen durch Ultraschallschweißung zu versenken, die Leitungen in Nuten einzulassen oder den Kunstharz-Türrahmen zusammen mit den Leitungen zu formen.

In den nachfolgenden Druckschriften sind verschiedene Lösungsansätze zur Befestigung von Flachleitungen, insbesondere an Kfz-Innenverkleidungsteilen, beschrieben. Aus der EP 0 826 558 A1 ist ein Anbringen eines Flachkabelbaums in einer Türverkleidung offenbart. Für den Flachkabelbaum ist in der Türverkleidung eine vorgeformte Vertiefung vorhanden. Der Flachkabelbaum wird in dieser Vertiefung aufgeklebt und mit einem aufgeklebten elastischen Schutzelement, z.B. geschäumtes Urethanharz-Material, abgedeckt, um eine Beschädigung zu vermeiden. Diese Befestigungsmöglichkeit ist mit dem Problem behaftet, dass die Türverkleidung als Trägermaterial bereits entsprechend vorbereitet sein muss und zur Befestigung und zum Schutz ein weiteres Element anzubringen ist. Damit sind aber sehr viele Arbeitsschritte notwendig, die Kosten verursachen.

In der EP 0 534 659 A2 ist die Befestigung einer Flachleitung am Türrahmen und an der Türverkleidung gezeigt. Die Befestigung erfolgt durch Aufkleben oder durch Einsetzen in eine Führungsschiene. In einer weiteren Ausführungsform ist gezeigt, dass die Flachleitung Perforationen aufweist, die in entsprechende Gummistöpsel am Trägerteil aufgedrückt werden. Wiederum sind mehrere Arbeitsvorgänge notwendig. Bei der letztgenannten Ausführungsform ist überdies eine sehr spezielle und aufwendige Ausgestaltung der Flachleitungen wie auch des Trägermaterials erforderlich.

In der DE 196 20 148 A1 ist allgemein erwähnt, dass in einem Aggregateträger einer Kraftfahrzeugtür aus faserverstärktem thermoplastischen Werkstoff ein Flachkabel zumindest streckenweise in die Wand und/oder Versteifungsrippen des Aggregateträgers eingebettet ist.

Schließlich ist in der DE 38 42 340 A1 beschrieben, dass elektrische Leiterfolien auf einer Wasserabweisfolie einer Kraftfahrzeugtür insbesondere durch Aufbügeln befestigt sind streckenweise in die Wand und/oder Versteifungsrippen des Aggregateträgers eingebettet ist.

Schließlich ist in der DE 38 42 340 A1 beschrieben, dass elektrische Leiterfolien auf einer Wasserabweisfolie einer Kraftfahrzeugtür insbesondere durch Aufbügeln befestigt sind.

Andererseits ist es bekannt, Formträgerteile - etwa Türverkleidungen - in einem Formpresswerkzeug herzustellen. Dabei sind z.B. Verstärkungseinlagen bzw. Verstärkungsfasern, etwa Naturfasern aus Flachs und Sisal, in eine Kunststoffmatrix, z.B. Polyurethan, eingebunden. Ein Zuschnitt aus dem Verstärkungsmaterial und die Kunststoffmatrix werden in dem Formpresswerkzeug unter Druck und Temperatur zu dem gewünschten Formträgerteil formgepresst und ausgehärtet.

Darüber hinaus offenbart das Patent Abstract of Japan 03086649 ein Herstellungsverfahren für einen Fahrzeugdachhimmel, bei dem ein flexibles Flachkabel beim Pressformen mit integriert wird. Hierzu wird das flexible Flachkabel zwischen zwei Lagen eingelegt.

Des weiteren offenbart die US-A-3,009,010 ein Verfahren zur Herstellung eines Flachleiterkabelbaums, wobei die Kupferschichten zuerst in spezieller Weise behandelt und daraufhin in eine Presse eingelegt werden. Auf diesen Kupferschichten wird eine Plastiklage aufgebracht, welche durch Laminieren unter Wärmebehandlung zu einem Verbund zusammengepresst werden. Somit wird ein kupferbeschichteter Kunststoffartikel bereitgestellt, der durch Ätzen oder Stanzen mit einem gewünschten Leitungsmuster versehen wird, so dass es sich daraus ein Flachleiterkabelbaum bildet.

Diese US-A-3, 009, 010 offenbart insbesondere ein Verfahren zum Fixieren von Flachleitungen auf einem Formträgerteil, bei dem
- eine Kunstoffmatrix in ein Formpresswerkzeug eingebracht wird,
- wenigstens eine Flachleitung an eine Wandung im Formpresswerkzeug angrenzend positioniert wird, und
- die Kunstoffmatrix im Formpresswerkzeug zu einem Formträgerteil verpresst und ausgehärtet wird, wobei die Kunstoffmatrix dabei eine Haftverbindung zwischen der Oberfläche des Formträgerteils und der zumindest einen Flachleitung herstellt.

### Darstellung der Erfindung

Das der Erfindung zugrundeliegende technische Problem besteht darin, ein einfaches und kostengünstiges Verfahren zum Anbringen von Flachleitern an durch Pressen und Aushärten einer Kunststoffmatrix hergestellten Formträgerteilen bereitzustellen.

Dieses technische Problem wird durch ein Verfahren mit den Merkmalen des Anspruchs 1, durch ein Formpresswerkzeug mit den Merkmalen des Anspruchs 8 sowie durch ein Formträgerteil mit den Merkmalen des Anspruchs 10 gelöst.

Dem erfindungsgemäßen Verfahren liegt der Gedanke zugrunde, das Formpressverfahren, das zur Herstellung des Formträgerteils eingesetzt wird, gleichzeitig zur Befestigung einer Flachleitung an der Oberfläche des Formträgerteils zu nutzen. Dazu wird wenigstens eine Flachleitung in den Formhohlraum eines Formpresswerkzeugs eingebracht. Dabei wird Formpresswerkzeug zu einem Formträgerteil verpreßt und ausgehärtet. Dabei stellt die Kunststoffmatrix eine Haftverbindung zwischen Formträgerteil und Flachleitung her.

Erfindungsgemäß erfüllt die Kunststoffmatrix also eine Doppelfunktion. Zum einen bildet sie die Form des Formträgerteils aus, zum anderen dient sie als Haftverbindungsmittel zwischen der Formträgerteiloberfläche und der Flachleitung. Mit anderen Worten wird der Herstellungsprozeß des Formträgerteils gleichzeitig als Verbindungsprozeß zum Anbringen einer Flachleitung auf dem Formträgerteil ausgenutzt. Somit lassen sich bei dem erfindungsgemäßen Verfahren die Flachleitungen besonders einfach und kostengünstig auf dem Formträgerteil fixieren. Überraschenderweise hat sich herausgestellt, daß die in das Formpresswerkzeug eingelegten Flachleitungen durch den anschließenden Verpress- und Aushärtevorgang nicht beschädigt werden. Weiterhin hat sich gezeigt, daß ein guter Haftverbund zwischen Formträgerteiloberfläche und Flachleitung erreicht wird. Die Flachleitungen lassen sich glatt und blasenfrei an der dreidimensional geformten Formträgerteil-Oberfläche fixieren. Unter Recycling-Gesichtspunkten können die Flachleitungen mit einer entsprechenden Abzugskraft wieder vom Formträgerteil gelöst werden. Für seinen Einsatzzweck weist jedoch der Verbund aus Formträgerteil und Flachleitung eine gute Haftung mit einer entsprechenden Abzugskraft auf.

Bei dem erfindungsgemäßen Verfahren kann zuerst die Flachleitung im Formhohlraum positioniert werden und danach die Kunststoffmatrix eingebracht werden oder umgekehrt. Beispielsweise wenn eine Verstärkungseinlage, etwa ein Naturfaserzuschnitt oder dergleichen, mit der Kunststoffmatrix getränkt ist, kann zuerst die Verstärkungseinlage mit der darin enthaltenen Kunststoffmatrix in den Formhohlraum eingebracht werden und danach die Flachleitung eingelegt bzw. aufgelegt werden. Es ist auch möglich, Flachleitung und Kunststoffmatrix gleichzeitig in den Formhohlraum einzubringen. Beispielsweise kann die Flachleitung auf einer mit der Kunststoffmatrix getränkten Verstärkungseinlage vorfixiert sein, so daß zusammen mit der Verstärkungseinlage gleichzeitig auch die Flachleitung und die Kunststoffmatrix in den Formhohlraum eingebracht werden.

Es ist hervorzuheben, dass unter dem Begriff Flachleitung jegliche Flachkabel, Flachleiter, Folienflachleiter, Flachleiterkabelbäume oder Flachkabelbäume aus mehreren der vorgenannten Leitungen zu subsummieren sind, insbesondere wie sie im Kraftfahrzeugbau, Flugzeugbau oder dergleichen verwendet werden. Vorzugsweise werden erfindungsgemäß Flexible-Printed-Circuits (FPC) oder Flexible-Flat-Cables (FFC) als Flachleitungen zur Anbringung am Formträgerteil verwendet.

Als Kunststoffmatrix können Harze, wie Vynol-, Crysol-, Melamin-, Harnstoff-, Epoxid- oder ungesättigte Polyesterharze, Silikone, thermoplastische oder duroplastische Kunststoffmaterialien oder dergleichen verwendet werden.

In einer günstigen Ausführungsform des erfindungsgemäßen Verfahrens wird zusätzlich ein Schichtstoff in den Formhohlraum eingelegt, insbesondere ein schichtförmiger Naturfaserzuschnitt wie z.B. aus Flachs/Sisal. Ein derartiger Schichtstoff dient als Verstärkungseinlage für das zu pressende Formträgerteil. Der Schichtstoff kann bereits mit der Kunststoffmatrix getränkt sein oder die Kunststoffmatrix kann nach dem Einlegen des Schichtstoffs in den Formhohlraum eingebracht werden. Anstelle eines Schichtstoffs können auch lose Verstärkungsmaterialien in den Formhohlraum eingebracht bzw. mit der Kunststoffmatrix vermischt werden. Als Schichtstoffmaterialien oder sonstige Verstärkungseinlagen bzw. -zusätze sind Naturfasern (z.B. Flachs, Sisal), Glasfasern, synthetische Verstärkungsfasern (z.B. Carbon), Papiere, Hartgewebe, verschiedenste Baumwollpapiere, Baumwollgewebe, Zellwollgewebe, alcalifreie Glasseiden, synthetische Gewebe, Glasseidenmatten, Asbestgewebe, Alpha-Zellulose- oder Linterspapiere oder andere geeignete Materialien einsetzbar.

In einer vorteilhaften Ausführungsform des erfindungsgemäßen Verfahrens wird die zumindest eine Flachleitung beim Einlegen in den Formhohlraum derart an Vertiefungen im Formpresswerkzeug, die an jeweils gewünschten Fixierstellen vorgesehen sind, angrenzend positioniert, daß die Vertiefungen jeweils die Flachleitung überspannen. Mit anderen Worten wird die Flachleitung entweder auf die Vertiefungen aufgelegt oder die Vertiefungen im Formpresswerkzeug legen sich beim Schließen bzw. Zusammenfahren des Werkzeugs auf die Flachleitung auf. Beim Verpressvorgang dringt die Kunststoffmatrix in die Vertiefungen ein, füllt diese aus und härtet unter Bildung jeweiliger Befestigungsstege für die Flachleitung aus. Die Vertiefungen im Formpresswerkzeug erstrecken sich also von einer Seite der Flachleitung zur anderen, so daß die Flachleitung überbrückt wird. Beim Formpreßvorgang fließt die Kunststoffmatrix in die Vertiefungen hinein und bildet eine durchgängige Materialbrücke über der Flachleitung aus. Nach dem Aushärten der Kunststoffmatrix ist die Flachleitung also an den gewünschten Befestigungsstellen zusätzlich durch die Befestigungsstege aus Kunststoffmatrix auf der Oberfläche des Formträgerteils fixiert. Durch die Vertiefungen im Formpresswerkzeug wird also die Kunststoffmatrix gezielt über die Flachleitung hinweg geleitet, um Befestigungsstege zu bilden. Die sich während des Pressvorgangs bildenden Befestigungsstege sind somit integraler Bestandteil des Formträgerteils und umschließen die Flachleitung an den gewünschten Befestigungsstellen. Bei Bedarf, z.B. um bei speziellen mechanischen oder thermischen Belastungen im Betrieb ein Ablösen der Flachleitung vom Formträgerteil zuverlässig und dauerhaft zu verhindern, können also mit dieser erfindungsgemäßen Ausführungsform auf einfache Weise an gefährdeten Stellen Befestigungsstege zur zusätzlichen formschlüssigen Fixierung der Flachleitung auf der Formträgerteiloberfläche ausgebildet werden.

Für diese Ausführungsform des erfindungsgemäßen Verfahrens ist ein an sich bekanntes Formpresswerkzeug nur geringfügig zu modifizieren. Der Formhohlraum des Formpresswerkzeugs ist mit wenigstens einer die einzulegende Flachleitung überspannenden Vertiefung versehen. Diese zumindest eine Vertiefung nimmt beim Verpressvorgang Kunststoffmatrix auf und bildet einen Befestigungssteg für die Flachleitung aus. Die Vertiefungen werden also im Preßstempel bzw. in der Preßmatrize ausgebildet und liegen im geschlossenen Zustand des Werkzeugs an der eingelegten Flachleitung an. Es ist zweckmäßig, die Vertiefungen mit einer solchen Tiefe und Breite auszubilden, daß die darüberliegende Flachleitung beim Verpressvorgang nicht wesentlich in die Vertiefung eingedrückt wird. Die Vertiefungen dürfen also nicht so breit und tief ausfallen, daß die darüberliegende Flachleitung beim Verpressvorgang soweit in die Vertiefung eingedrückt wird, daß sich kein Befestigungssteg ausbilden kann. Mit anderen Worten muß die Vertiefung eine solche Tiefe und Breite haben, daß zwar einerseits die Kunststoffmatrix in die Vertiefung eindringen kann und nach dem Aushärten einen Befestigungssteg, der die Flachleitung überspannt, ausbilden kann, daß andererseits jedoch die Flachleitung nicht so weit in die Vertiefung eingedrückt werden kann, daß dadurch das Einfließen der Kunststoffmatrix in die Vertiefung verhindert werden würde.

Die Vertiefungen können prinzipiell im Werkzeugoberteil oder Werkzeugunterteil ausgebildet sein. Sie müssen selbstverständlich auf der Seite des Formwerkzeugs liegen, auf der auch die Flachleitungen zur Anlage kommen.

Es ist hervorzuheben, dass mit dieser erfindungsgemäßen Verfahrensausgestaltung auch ggf. vorhandene, nicht isolierte Verbindungsstellen der zu befestigenden Flachleitungen durch die aufgebrachten Befestigungsstege sowohl isoliert wie auch zusätzlich fixiert werden können. Dadurch können zusätzliche Isolierungen und Befestigungen, die sonst erforderlich wären, eingespart werden.

Bei einem erfindungsgemäßen Formträgerteil, das durch Verpressen und Aushärten einer Kunststoffmatrix geformt ist und mit zumindest einer Flachleitung versehen ist, ist die zumindest eine Flachleitung durch die beim Formen des Formträgerteils ausgehärtete Kunststoffmatrix an der Oberfläche des Formträgerteils angeheftet. In einer Ausgestaltung enthält das Formträgerteil einen Schichtstoff als Verstärkungseinlage. Der Schichtstoff kann als Zuschnitt aus Papier, Gewebe, Furnier, Vlies oder einer Matte aus Natur- und/oder Synthese- oder Glasfasern oder dgl. gebildet ein. Erfindungsgemäß ist die zumindest eine Flachleitung an ihrer Auflagefläche durch die ausgehärtete Kunststoffmatrix des Formträgerteils auf dessen Oberfläche fixiert. In einer Ausführungsform der Erfindung ist die zumindest eine Flachleitung zusätzlich an vorbestimmten Stellen mit Befestigungsstegen, die einstückig aus der Kunststoffmatrix bestehen, überspannt. Dadurch erfolgt eine zusätzliche Fixierung der Flachleitung durch formschlüssige Befestigungsstege. Je nach Anwendungsgebiet und den vorliegenden Betriebsbedingungen ist vielfach die erfindungsgemäße, auf der Haftverbindung durch die Kunststoffmatrix basierende Fixierung der Flachleitung auf der Oberfläche des Formträgerteils ausreichend. Diese Haftverbindung wirkt auf der gesamten Anlagefläche der Flachleitung am Formträgerteil. In den Fällen, in denen diese Haftverbindung nicht ausreicht oder eine zusätzliche Sicherungseinrichtung gewünscht wird, ist es günstig, gezielt die zusätzlichen integralen Befestigungsbrücken auszubilden. Solche Befestigungsbrücken können insbesondere im Bereich der Enden der Flachleitung oder im Bereich von Verbindungsstellen zweckmäßig sein.

### Kurze Beschreibung der Zeichnungen

Im Folgenden sind zur weiteren Erläuterung und zum besseren Verständnis Ausführungsbeispiele der Erfindung unter Bezugnahme auf die beigefügten Zeichnungen näher beschrieben. Es zeigt:
- Fig. 1: eine schematische Querschnittsansicht einer ersten Ausführungsform eines Formpresswerkzeug einer Presse mit darin plaziertem, matrixgetränkten Schichtstoff und eingelegter Flachleitung;
- Fig. 2: eine schematische Draufsicht auf ein erstes Formträgerteil mit darauf befestigter Flachleitung;
- Fig. 3: eine schematische Querschnittsansicht einer zweiten Ausführungsform eines Formpresswerkzeug einer Presse mit darin plaziertem, matrixgetränkten Schichtstoff und eingelegter Flachleitung;
- Fig. 4: eine Draufsicht auf einen Teil eines zweiten Formträgerteils mit darauf befestigter Flachleitung und die Flachleitung überspannendem Befestigungssteg;
- Fig. 5: einen Querschnitt entlang der Linie A-B in Fig. 4;
- Fig. 6: eine schematische Draufsicht auf das zweite Formträgerteil mit darauf befestigter Flachleitung und die Flachleitung überspannenden Befestigungsstegen.

### Beschreibung bevorzugter Ausführungsbeispiele der Erfindung

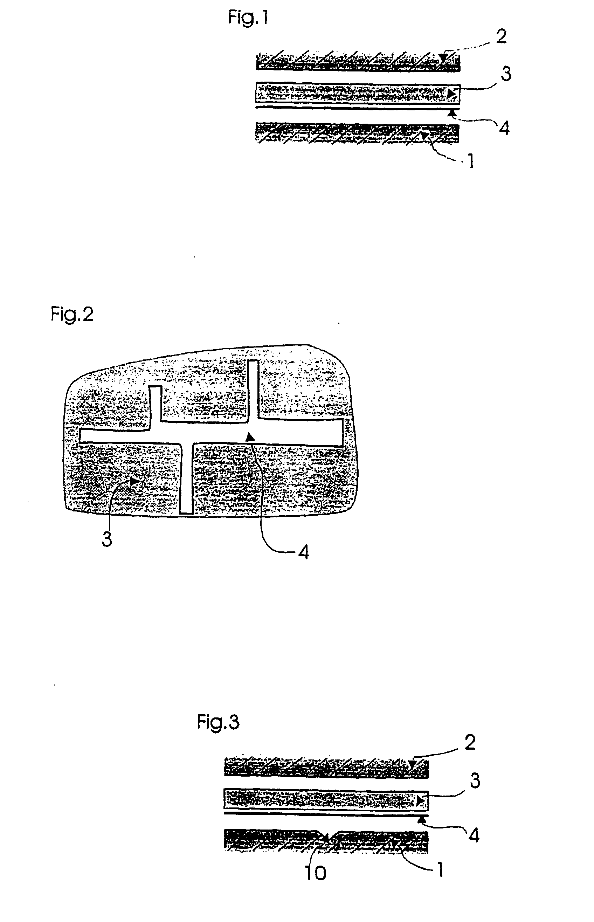

Das in der Fig. 1 schematisch dargestellte Formpresswerkzeug umfasst einen Stempel 1 und eine Matrize 2 (Gesenk). Ein mit einer Polyurethan-Matrix getränkter Naturfaserzuschnitt 3 ist in den Formhohlraum zwischen dem Gesenk 2 und dem Stempel 1 eingelegt. Zwischen dem Stempel 1 und dem Naturfaserzuschnitt 3 ist eine Flachleitung 4 im Formhohlraum plaziert.

Das Formpresswerkzeug wird zusammengefahren und unter Druck und Wärme wird ein Formträgerteil 3 geformt. Die Flachleitung 4 wird während dieses Formpressvorgangs an die Oberfläche des entstehenden Formträgerteils angepresst. Nach dem Aushärten der Polyurethan-Matrix ist die Flachleitung 4 auf dem fertigen Formträgerteil 3 befestigt. Dabei stellt die ausgehärtete Polyurethan-Matrix die Haftverbindung zwischen Formträgerteil und Flachleitung her. Das so hergestellte Formträgerteil 3 ist in Fig. 2 veranschaulicht. Die Flachleitung 4 ist - an ihrer Auflagefläche - flächig mit dem Trägerformteil 3 verbunden.

In Fig. 3 ist eine Variante des Formpresswerkzeugs von Fig. 1 dargestellt. Der Stempel 1 weist hier eine zusätzliche kanalförmige Vertiefung 10 auf, die im Beispiel einen dreiecksförmigen Querschnitt hat. Die Vertiefung 10 ist über ihre Länge nicht gleichmäßig tief, sondern läuft zu den Rändern hin aus. Die Länge der Vertiefung 10 ist auf jeden Fall breiter zu wählen als die darüberliegende, querende Flachleitung 4.

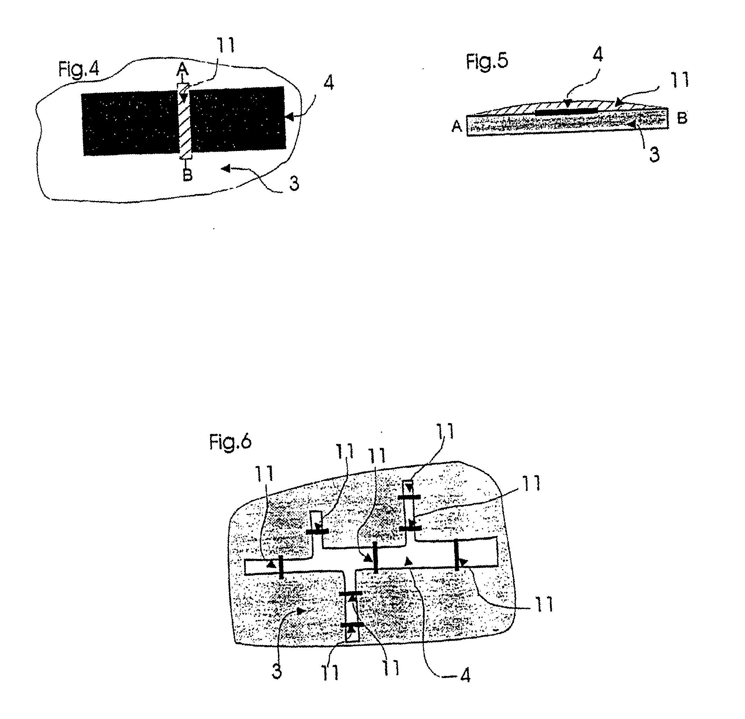

In der Draufsicht gemäß der Fig. 4 ist die Flachleitung von einem Befestigungssteg 11 überbrückt, der aus ausgehärteter Polyurethan-Matrix besteht. Die Polyurethan-Matrix wurde während des Formpressvorgangs für das Formträgerteil 3 aus dem matrixgetränkten Naturfaserzuschnitt herausgedrückt und ist in die Vertiefung 10 eingeflossen. Die Ausbildung des Befestigungssteges 11 ist insbesondere aus der Querschnittsdarstellung gemäß der Fig. 5 ersichtlich. Er verläuft quer über die an der Oberfläche des Formträgerteils 3 durch Haftverbindung befestigte Flachleitung 4, überspannt bzw. überbrückt diese und umhüllt sie im Querschnitt gesehen vollständig.

Fig. 6 zeigt ein gesamtes Formträgerteil 3 entsprechend Fig 4 und 5, das mit einem Formpresswerkzeug nach Fig. 3 hergestellt ist. Mit Hilfe mehrerer Vertiefungen 10 im Formpresswerkzeug sind mehrere Befestigungsstege 11 realisiert worden, mit denen die Flachleitung 4 - zusätzlich zur flächigen Haftverbindung - punktuell formschlüssig auf der Formträgerteiloberfläche befestigt ist. Insbesondere ein Lösen der Flachleitung 4 von deren freien Enden her ist somit zuverlässig unterbunden.

Es ist klar, dass zum Längsschnitt des Befestigungssteges 11 in Fig. 5 auch die entsprechende längliche Ausbildung der Vertiefung 10 im Stempel 1 in Fig. 3 korrespondiert. Der Befestigungssteg 11 ist, wie bereits zuvor ausführlich erläutert, das Ergebnis des in die Vertiefung 10 eingedrungenen und ausgehärteten Kunststoffmatrix-Materials.

Die in den Fig. 2 und 6 dargestellten Formträgerteile 3 sind jeweils dreidimensional geformte Türinnenverkleidungsschalen für Kraftfahrzeuge. Die daran befestigten Flachleitungen 4 sind im Beispiel jeweils Folienleiter-Kabelbäume zur Türverdrahtung.

Die Durchführung des Verfahrens mit dem Werkzeug gemäß der Fig. 1 erfolgt folgendermaßen. Auf dem Stempel 1 wird die Flachleitung 4 in der erforderlichen Ausrichtung aufgelegt. Dann wird der mit der Kunststoffmatrix getränkte Naturfaserzuschnitt 3 aufgelegt und durch Herunterfahren des Gesenks 2 der Formpressvorgang eingeleitet. Nach einer gewissen Press- und Aushärtezeit wird das Gesenk 2 nach oben verfahren und das gepresste Formträgerteil 3 mit dem nun daran befestigten Flachleiter 4 entnommen.

Der Verfahrensablauf bei dem Werkzeug gemäß Fig. 3 erfolgt grundsätzlich in entsprechender Weise wie zuvor anhand von Fig. 1 beschrieben. Der Stempel 1 des Formpresswerkzeugs ist jedoch an den jeweiligen Stellen, an denen eine zusätzliche Fixierung der Flachleitung 4 gewünscht wird, mit Vertiefungen 10 versehen. Während des Pressvorgangs wird die Kunststoffmatrix, im Beispiel Polyurethan, aus dem Naturfaserzuschnitt, z.B. Flachs/Sisal, herausgedrückt, dringt in die Vertiefungen 10 ein und füllt die Vertiefungen 10 vollständig aus. Durch das nachfolgende Aushärten ergeben sich somit die Befestigungsstege 11, wie sie in den Fig. 4 bis 6 gezeigt sind.

## Patentansprüche

1. Verfahren zum Fixieren von Flachleitungen auf einem Formträgerteil als Trägerbauteil eines Fahrzeugs, bei dem
- wenigstens eine Flachleitung (4) im Formhohlraum eines Formpresswerkzeugs (1, 2) an eine Wandung (1) des Formhohlraums angrenzend positioniert wird,
- eine Kunststoffmatrix in den Formhohlraum eingebracht wird, und
- die Kunststoffmatrix im Formpresswerkzeug (1, 2) zu einem Formträgerteil (3) verpresst und ausgehärtet wird, wobei die Kunststoffmatrix dabei eine Haftverbindung zwischen der Oberfläche des Formträgerteils (3) und der zumindest einen Flachleitung (4) herstellt.

2. Verfahren nach Anspruch 1, **dadurch gekennzeichnet, daß** Flexible-Printed-Circuits (FPC) oder Flexible-Flat-Cables (FFC) als Flachleitungen (4) eingelegt werden.

3. Verfahren nach Anspruch 1 oder 2, **dadurch gekennzeichnet, daß** zusätzlich ein Schichtstoff in den Formhohlraum eingelegt wird.

4. Verfahren nach Anspruch 3, **dadurch gekennzeichnet, daß** als Schichtstoff ein Naturfaserzuschnitt eingelegt wird.

5. Verfahren nach Anspruch 3 oder 4, **dadurch gekennzeichnet, daß** der Schichtstoff mit der Kunststoffmatrix getränkt ist.

6. Verfahren nach Anspruch 3 oder 4, **dadurch gekennzeichnet, daß** die Kunststoffmatrix nach dem Einlegen des Schichtstoffs eingebracht wird.

7. Verfahren nach einem der Ansprüche 1 bis 6, **dadurch gekennzeichnet, daß**
- die wenigstens eine Flachleitung (4) im Formhohlraum derart an Vertiefungen (10) im Formpreßwerkzeug (1, 2), die an jeweils gewünschten Fixierstellen vorgesehen sind, angrenzend positioniert wird, daß die Vertiefungen (10) jeweils die Flachleitung (4) überspannen und
- daß die Kunststoffmatrix derart verpresst wird, daß sie in die Vertiefungen (10) eindringt, diese ausfüllt und unter Bildung jeweiliger Befestigungsstege (11) für die Flachleitung (4) aushärtet.

8. Formpresswerkzeug für das Verfahren nach Anspruch 7, **dadurch gekennzeichnet, daß** der Formhohlraum des Formpresswerkzeugs (1, 2) mit wenigstens einer die einzulegende Flachleitung (4) überspannenden Vertiefung (10) versehen ist, die beim Verpressvorgang Kunststoffmatrix aufnimmt und einen Befestigungssteg (11) für die Flachleitung (4) ausbildet.

9. Formpresswerkzeug nach Anspruch 8, **dadurch gekennzeichnet, daß** die zumindest eine Vertiefung (10) eine solche Tiefe und Breite aufweist, daß die darüberliegende Flachleitung (4) beim Verpressvorgang nicht wesentlich in die Vertiefung eingedrückt wird.

10. Formträgerteil als Trägerbauteil eines Fahrzeugs, das durch Verpressen und Aushärten einer Kunststoffmatrix geformt ist und mit zumindest einer Flachleitung (4) versehen ist, wobei die zumindest eine Flachleitung (4) durch die beim Formen des Formträgerteils (3) ausgehärtete Kunststoffmatrix an der Oberfläche des Formträgerteils (3) angeheftet ist.

11. Formträgerteil nach Anspruch 10, **dadurch gekennzeichnet, daß** das Formträgerteil (3) einen Schichtstoff als Verstärkungseinlage enthält.

12. Formträgerteil nach Anspruch 11, **dadurch gekennzeichnet, daß** der Schichtstoff als Zuschnitt aus Papier, Gewebe, Furnier, Vlies oder einer Matte aus Natur- und/oder Synthese- oder Glasfasern gebildet ist.

13. Formträgerteil nach einem der Ansprüche 10 bis 12, **dadurch gekennzeichnet, daß** die zumindest eine Flachleitung (4) zusätzlich an vorbestimmten Stellen mit Befestigungsstegen (11), die einstückig aus der Kunststoffmatrix gebildet sind, überspannt ist.

## Claims

1. Method for fixing flat cables on a moulded carrier part as carrier component of a vehicle, in which
- at least one flat cable (4) is positioned in the moulded hollow space of a compression moulding die (1, 2) adjacent to a wall (1) of the moulded hollow space,
- a plastics material matrix is fed into the moulded hollow space and
- the plastics material matrix is pressed and hardened in the compression moulding die (1, 2) to form a moulded carrier part (3), wherein the plastics material matrix therein produces an adhesive connection between the surface of the moulded carrier part (3) and the at least one flat cable (4).

2. Method according to claim 1, **characterised in that** flexible printed circuits (FPC) or flexible flat cables (FFC) are inserted as flat cables (4).

3. Method according to claim 1 or 2, **characterised in that** a coating material is additionally inserted into the moulded hollow space.

4. Method according to claim 3, **characterised in that** a natural fibre blank is inserted as coating material.

5. Method according to claim 3 or 4, **characterised in that** the coating material is impregnated with the plastics material matrix.

6. Method according to claim 3 or 4, **characterised in that** the plastics material matrix is fed in after the coating layer has been inserted.

7. Method according to one of claims 1 to 6, **characterised in that**
- the at least one flat cable (4) is positioned in the moulded hollow space adjacent to indentations (10) in the compression moulding die (1, 2), which are provided at desired fixed points in each case, in such a way that the indentations (10) in each case span the flat cable (4) and
- the plastics material matrix is pressed in such a way that it penetrates the indentations (10), fills them and hardens while forming respective fastening webs (11) for the flat cable (4).

8. Compression moulding die for the method according to claim 7, **characterised in that** the moulded hollow space of the compression moulding die (1, 2) is provided with at least one indentation (10) which spans the flat cable (4) to be inserted and during the pressing process receives plastics material matrix and forms a fastening web (11) for the flat cable (4).

9. Compression moulding die according to claim 8, **characterised in that** the at least one indentation (10) has a depth and width such that the flat cable (4) located above is not substantially pressed into the indentation during the pressing process.

10. Moulded carrier part as carrier component of a vehicle, which is moulded by pressing and hardening of a plastics material matrix and is provided with at least one flat cable (4), wherein the at least one flat cable (4) is attached to the surface of the moulded carrier part (3) by the plastics material matrix hardened during moulding of the moulded carrier part (3).

11. Moulded carrier part according to claim 10, **characterised in that** the moulded carrier part (3) contains a coating material as reinforcing intermediate layer.

12. Moulded carrier part according to claim 11, **characterised in that** the coating material is formed as a blank made of paper, woven cloth, veneer, non-woven fabric or a mat made of natural and/or synthetic or glass fibres.

13. Moulded carrier part according to one of claims 10 to 12, **characterised in that** the at least one flat cable (4) is additionally spanned at predetermined points by fastening webs (11) which are formed in one piece from the plastics material matrix.

## Revendications

1. Procédé de fixation de conducteurs plats sur une pièce support moulée réalisée sous la forme de composant support d'un véhicule, dans lequel
- au moins un conducteur plat (4) est positionné, dans l'espace creux profilé d'un outil de moulage par compression (1, 2) adjacent à une paroi (1) de l'espace creux de moule,
- une matrice en matière synthétique est introduite dans l'espace creux de moulage,
- la matrice en matière synthétique est comprimée dans l'outil de moulage par compression (1, 2) pour obtenir une pièce support moulée (3) et est durcie, la matrice en matière synthétique produisant alors une liaison d'adhésion entre la surface de la pièce support moulée (3) et le au moins un conducteur plat (4).

2. Procédé selon la revendication 1, **caractérisé en ce que** des circuits imprimés flexibles (FPC) ou des câbles plats flexibles (FFC) sont introduits à titre de conducteurs plats (4).

3. Procédé selon la revendication 1 ou 2, **caractérisé en ce que**, en plus, un produit stratifié est introduit dans l'espace creux de moulage.

4. Procédé selon la revendication 3, **caractérisé en ce qu'**on insère comme produit stratifié un flan en fibres naturelles.

5. Procédé selon la revendication 3 ou 4, **caractérisé en ce que** la produit stratifié est imbibé d'une matrice de matière synthétique.

6. Procédé selon la revendication 3 ou 4, **caractérisé en ce que** la matrice de matière synthétique est introduite après insertion du produit stratifié.

7. Procédé selon l'une des revendications 1 à 6,
**caractérisé en ce que**
- le au moins un conducteur plat (4) est positionné dans l'espace creux de moulage de façon limitrophe à des cavités (10) ménagées dans l'outil de moulage par compression (1, 2), qui sont prévues chaque fois en des points de fixation souhaités, de manière que les cavités (10) fassent chaque fois la longueur du conducteur plat (4), et
- **en ce que** la matrice de matière synthétique est pressée de manière qu'elle pénètre dans les cavités (10), les remplisse et durcisse en formant chaque fois des nervures de fixation (11) pour le conducteur plat (4).

8. Outil de moulage par compression pour le procédé selon la revendication 7, **caractérisé en ce que** l'espace creux de moulage de l'outil de moulage par compression (1, 2) est muni d'au moins une cavité (10) faisant la longueur du conducteur plat (4) à insérer, la cavité recevant de la matière synthétique, lors du processus de pressage, et formant une nervure de fixation (11) pour le conducteur plat (4).

9. Outil de moulage par compression pour le procédé selon la revendication 8, **caractérisé en ce que** la au moins une cavité (10) est d'une telle profondeur et largeur, que le conducteur plat (4) placé au-dessus n'est pratiquement pas enfoncée dans la cavité lorsqu'on procède au processus de pressage.

10. Pièce support moulée, réalisée sous la forme de composant support d'un véhicule, formée par pressage et durcissement d'une matrice en matière synthétique et munie d'au moins un conducteur plat (4), le au moins un conducteur plat (4) étant agrafé sur la surface de la pièce moulée support (3), par la matrice de matière synthétique durcie lors du moulage de la pièce support moulée (3).

11. Pièce support moulée selon la revendication 10, **caractérisée en ce que** la pièce support moulée (3) contient un produit stratifié à titre d'insert de renforcement.

12. Pièce support moulée selon la revendication 11, **caractérisé**e le produit stratifié est formé en tant que flan en papier, textile, placage, matelas de fibres ou non tissée, ou d'un matelas de fibres, naturelles et/ou de synthèse et/ou de verre.

13. Pièce support moulée selon l'une des revendications 10 à 12, **caractérisée en ce que**, en plus, en des emplacements prédéterminés, le au moins un conducteur plat (4) est couvert de nervures de fixation (11) formées d'un tout à partir de la matrice de matière synthétique.
